(19) Europäisches Patentamt / European Patent Office / Office européen des brevets

(11) **EP 4 037 889 B1**

(12) **FASCICULE DE BREVET EUROPEEN**

(45) Date de publication et mention de la délivrance du brevet:
**01.11.2023 Bulletin 2023/44**

(21) Numéro de dépôt: **20767814.5**

(22) Date de dépôt: **09.09.2020**

(51) Classification Internationale des Brevets (IPC):
**B29C 55/00** (2006.01)   **B29C 55/12** (2006.01)
**B29D 7/01** (2006.01)   **B29C 48/00** (2019.01)
**B29C 48/08** (2019.01)   **B29C 48/92** (2019.01)
**B29K 105/04** (2006.01)   **B29K 105/00** (2006.01)

(52) Classification Coopérative des Brevets (CPC):
**B29C 55/005; B29C 48/0018; B29C 48/023; B29C 48/08; B29C 48/92; B29C 55/12; B29D 7/01;** B29C 2948/9219; B29C 2948/92447; B29K 2105/0038; B29K 2105/04

(86) Numéro de dépôt international:
**PCT/EP2020/075143**

(87) Numéro de publication internationale:
**WO 2021/063641 (08.04.2021 Gazette 2021/14)**

(54) **PROCEDE DE FABRICATION D'UN FILM COMPORTANT DES CAVITES AVEC DETERMINATION DE PROFILS D'ETIRAGE, DE MASSE VOLUMIQUE, D'EPAISSEUR ET/OU DE POROSITE DU FILM**

VERFAHREN ZUR HERSTELLUNG EINES KAVITÄTEN BEINHALTENDEN FILMS MIT BESTIMMUNG VON DEHNUNGSPROFILE, DICHTE, DICKE UND/ODER POROSITÄT DES FILMS

METHOD OF MANUFACTURING A FILM CONTAINING CAVITIES WITH DETERMINATION OF STRETCH PROFILES, DENSITY, THICKNESS AND/OR POROSITY OF THE FILM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2019 FR 1910947**

(43) Date de publication de la demande:
**10.08.2022 Bulletin 2022/32**

(73) Titulaire: **Aleph SAS**
**73290 La Motte Servolex (FR)**

(72) Inventeur: **GAUDAEN, Jan**
**73100 AIX LES BAINS (FR)**

(74) Mandataire: **IP Trust**
**2, rue de Clichy**
**75009 Paris (FR)**

(56) Documents cités:
**EP-A1- 3 124 201   US-A1- 2006 121 269**
**US-B2- 7 813 829**

**Description**

Domaine technique

L'invention concerne un procédé de fabrication d'un film dans lequel des cavités sont créées au cours d'une ou plusieurs étapes d'étirage, avec des étapes de caractérisation de ce film.

Technique antérieure

Un film à base d'un matériau polymère peut être rendu poreux par étirage quand un matériau cavitant est mélangé finement au polymère.

Un film étiré longitudinalement, c'est-à-dire dans le sens de défilement du film voit sa longueur augmentée.

Un film étiré longitudinalement peut subir un retrait dans le sens transverse et peut donc voir sa largeur diminuée.

Un film étiré transversalement, c'est-à-dire transversalement au sens de défilement du film, voit sa largeur augmentée.

Un film est souvent étiré transversalement et longitudinalement, soit séquentiellement, soit simultanément.

Un agent cavitant est un matériau dispersé dans le polymère dont les îlots provoquent mécaniquement l'apparition de cavités dans les volumes qui les environnent lors de l'étirage, comme divulgué dans les publications de documents de brevet US 2006/0121259 et WO 2010/059448.

Des techniques de caractérisation prenant en compte la déformation d'un tel film et la répartition de la matière le constituant au cours de l'étirage ont été développées, à des fins d'optimisation du procédé de fabrication en général et de l'étape d'étirage en particulier.

Par exemple, le brevet US 7,813,829 divulgue la caractérisation de l'épaisseur d'un film, d'une part après son extrusion en amont d'un étirage transversal, puis d'autre part en aval de cet étirage transversal.

Des techniques de caractérisation d'un film sur sa ligne de production s'appuient sur des capteurs dont le principe est l'absorption d'un rayonnement ou d'une onde et qui naturellement rendent compte de la répartition de la matière. Le brevet US 7 813 829 B2 divulgue un procédé de fabrication d'un film comportant des cavités et formé à partir d'un polymère dans lequel un agent cavitant est dispersé ledit procédé comprenant une étape d'extrusion du polymère dans une ligne de production équipée d'actuateurs de réglage de caractéristiques du film extrudé et une étape d'étirage du film ainsi qu'une étape consistant à établir une fonction de mapping du film et que on commande lesdits actuateurs de réglage en fonction d'un profil transversal caractéristique du film.

La répartition de la matière au cours de la fabrication d'un film amène à définir une fonction dite de « mapping » établissant une correspondance entre une position transversale dans le film avant l'étirage et une position transversale dans le film après l'étirage.

Par ailleurs, si les capteurs mis en oeuvre permettent une caractérisation précise des bords du film, on peut définir la fonction de mapping en traçant les courbes de masse surfacique cumulée selon la direction transversale à partir des mesures de masse surfacique.

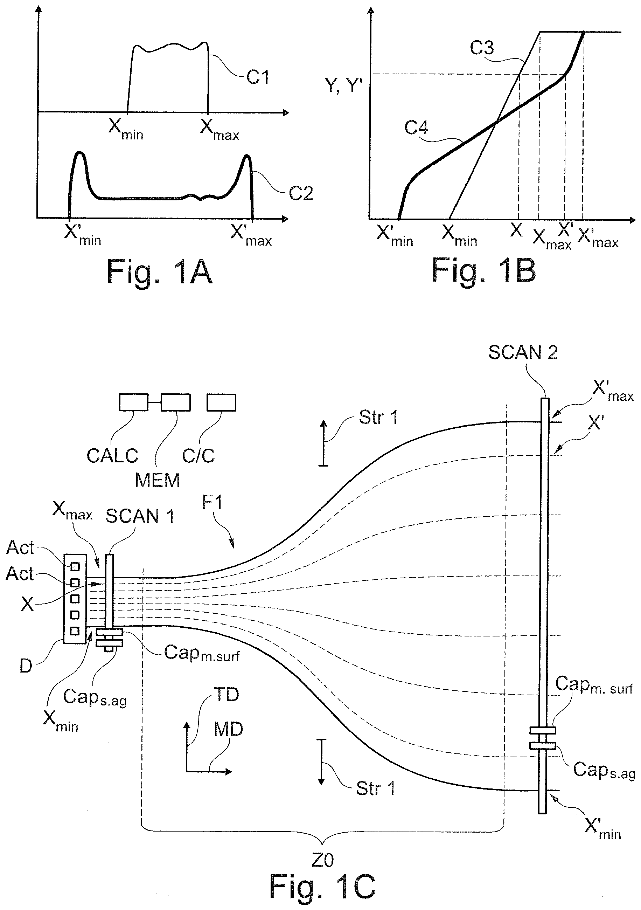

La figure 1A illustre des profils de masse surfacique C1 et C2 du film respectivement avant et après son étirage, avec les localisations transversales $X_{min}$ et $X_{max}$ correspondant aux bords du film avant étirage et les localisations transversales $X'_{min}$ et $X'_{max}$ aux bords du film après étirage.

La figure 1B montre des courbes C3 et C4 de masse surfacique cumulée selon la direction transversale et normalisée, tirées respectivement des courbes C1 et C2 de la figure 1A, avant et après étirage respectivement.

La fonction de mapping est ici définie comme une correspondance entre une localisation transversale X' du film après étirage avec une masse surfacique cumulée et normalisée Y' et la localisation transversale X du film avant étirage avec la masse surfacique cumulée et normalisée Y, avec Y égale à Y'.

Dans le cas d'un film ne comportant pas de cavités, un profil d'épaisseur peut être directement déduit d'un profil de masse surfacique, par division des valeurs de masse surfacique (exprimées par exemple en g/m$^2$) par la masse volumique du film (exprimée par exemple en g/m$^3$) qui est, dans un tel cas, une constante.

La connaissance de la fonction de mapping et la caractérisation du profil d'épaisseur du film après étirage permettent ensemble d'ajuster les paramètres de fabrication agissant sur le profil d'épaisseur du film en amont de l'étirage de manière à rendre le film homogène en épaisseur après l'étirage, comme divulgué dans les brevets US 5,928,580 et US 7,813,829.

Dans ce contexte, la caractérisation du profil d'épaisseur du film est donc une étape incontournable dans le contrôle du procédé de fabrication.

Cependant, dans les cas de films comportant des cavités, tels que des membranes microporeuses, des films respirables ou des films perlés, un profil d'épaisseur ne peut pas être déduit de façon satisfaisante d'un profil de masse surfacique.

En effet, les techniques de mesure de masse surfacique de films, qu'elles soient basées sur des rayons bêtas, X ou infrarouges ou sur des ultrasons, reposent sur la mesure d'une quantité de matière et ne fournissent pas directement l'épaisseur du film à caractériser.

L'épaisseur en un point donné du film est donnée par le rapport entre sa masse surfacique et sa masse volumique en ce point.

Conventionnellement, la masse volumique locale n'étant pas connue, on la suppose constante.

Or, en pratique, pour un film poreux, les cavités peuvent ne pas être uniformément réparties dans le film, l'hypothèse de la masse volumique constante n'est plus vérifiée et la caractérisation de son épaisseur est sujette à erreurs.

En outre, même dans les cas où un profil de masse volumique inhomogène est estimé de manière prédictive à partir d'une connaissance des machines et des procédés employés, cette estimation reste empirique et ne permet pas de s'adapter à une situation nouvelle ou de réagir face à des changements inattendus.

Ainsi, les méthodes conventionnelles de caractérisation d'un film comportant des cavités restent insuffisamment fiables et précises et ne permettent pas de parer à des évolutions imprévues dans les caractéristiques d'un film en cours de formation.

Exposé de l'invention

Un objectif de l'invention est d'améliorer un procédé de fabrication d'un film comportant des cavités au moyen d'un meilleur contrôle des caractéristiques d'un tel film, en augmentant la précision des mesures de profils caractéristiques du film, en particulier les profils d'étirage, de masse volumique, d'épaisseur et/ou de porosité.

Le procédé selon l'invention permet une caractérisation fiable d'un film présentant une masse volumique variable en raison d'une répartition inhomogène de cavités fermées et/ou traversantes au sein du film, porosité incluse.

A cet effet, l'invention a pour objet un procédé de fabrication d'un film comportant des cavités et formé à partir d'un polymère dans lequel un agent cavitant est dispersé, ledit procédé comprenant une étape d'extrusion du polymère dans une ligne de production équipée d'actuateurs de réglage de caractéristiques du film extrudé et une étape d'étirage du film ainsi qu'une étape consistant à établir une fonction de mapping du film, dans lequel un premier capteur de masse surfacique mesure un profil transversal de masse surfacique du film non étiré ; un deuxième capteur de masse surfacique mesure un profil transversal de masse surfacique du film étiré par ledit étirage ; une unité de calcul calcule (S50a, S150a) ladite fonction de mapping du film étiré à partir desdits profils transversaux de masse surfacique ; ladite unité de calcul calcule un profil d'étirage du film étiré, à partir de ladite fonction de mapping et desdits profils transversaux de masse surfacique ; ladite unité de calcul calcule un profil transversal caractéristique du film à partir dudit profil d'étirage et d'un profil transversal de concentration massique de l'agent cavitant dans le film étiré qui permet de prendre en compte la répartition des cavités et de leurs tailles dans le film, et on commande lesdits actuateurs de réglage en fonction dudit profil transversal caractéristique.

Comme décrit plus haut, lorsqu'un film formé à partir d'un polymère dans lequel est dispersé un agent cavitant est soumis à un étirage, des cavités se forment au niveau d'îlots de l'agent cavitant.

Les inventeurs de la présente invention ont déterminé que le volume des cavités ainsi formées étant proportionnel à l'étirage du film, un profil d'étirage calculé sur la base de profils de masse surfacique du film avant et après étirage caractérise le film et peut être obtenu en cours de formation de celui-ci.

Combiné à la distribution d'un agent cavitant dans le film, le profil d'étirage ainsi obtenu est indicateur d'une répartition des cavités et permet donc une caractérisation du film prenant en compte une répartition potentiellement inhomogène de cavités au sein de celui-ci.

En particulier, ce profil d'étirage du film permet de déduire un profil de masse volumique du film, un profil d'épaisseur du film, et un profil de porosité du film, tenant chacun compte de la répartition et de la taille des cavités au sein du film.

La détermination des profils du procédé de fabrication selon l'invention repose ainsi sur des mesures de masse surfacique en amont et en aval d'une zone d'étirage transversal du film, et sur la connaissance de la distribution de l'agent cavitant, a priori ou par mesure in situ en ligne.

Le profil d'étirage transversal étant déterminé à partir de mesures de masses surfaciques faites sur le film en formation, ce profil d'étirage fournit une information basée sur des caractéristiques réelles du film, et non seulement sur une hypothèse d'homogénéité du film ou d'estimations faites à partir de mesures a posteriori de films fabriqués antérieurement.

L'étirage longitudinal, c'est-à-dire dans le sens machine, peut être calculé à partir des mêmes données.

En outre, le procédé de mesure d'épaisseur du film selon l'invention est indépendant du type de film formé et du type de machine utilisé, s'adaptant automatiquement à des environnements de fabrication variés.

Le procédé de fabrication selon l'invention peut présenter les particularités suivantes :

- ledit profil transversal de ladite concentration massique de l'agent cavitant peut être déduite dudit profil transversal de masse surfacique du film étiré et d'un profil de masse surfacique d'agent cavitant mesuré par un capteur de masse surfacique d'agent cavitant ;
- un profil de masse surfacique d'agent cavitant du film non étiré peut être mesuré par un capteur de masse surfacique d'agent cavitant ; un profil transversal de concentration massique de l'agent cavitant du film non étiré peut être déduit dudit profil de masse surfacique d'agent cavitant et dudit profil transversal de masse surfacique du film non étiré ; et on peut remplacer ledit profil transversal de concentration massique de l'agent cavitant dans le film étiré par l'application de la fonction de mapping audit profil transversal de concentration massique de l'agent cavitant du film non étiré ;
- ledit profil transversal de concentration massique de l'agent cavitant peut être assimilé à la concentration moyenne de l'agent cavitant dans le film ;
- le film peut subir une perte en agent cavitant entre les deux mesures de profil transversaux de masse surfacique ; un premier capteur de masse surfacique d'agent cavitant peut mesurer un profil transversal de masse surfacique en agent cavitant du film non étiré ; un deuxième capteur de masse surfacique d'agent cavitant peut mesurer un profil transversal de masse surfacique d'agent cavitant du film étiré ; ladite unité de calcul peut calculer des profils transversaux de la masse surfacique du film en polymère seul par soustraction des profils transversaux de masse surfacique d'agent cavitant des profils transversaux de masse surfacique du film ; et ladite unité de calcul peut calculer ladite fonction de mapping à partir des profils transversaux de masse surfacique du film en polymère seul ;
- le procédé de fabrication peut comprendre une première étape d'étirage du film dans une première zone et une seconde étape d'extraction d'agent cavitant du film dans une deuxième zone en aval de la première zone, le deuxième capteur de masse surfacique pouvant mesurer ledit profil transversal de masse surfacique d'agent cavitant dans du film étiré en aval de la première zone et en amont de la deuxième zone ;
- ledit profil transversal caractéristique du film peut être un profil transversal de masse volumique du film ;
- ladite unité de calcul peut calculer un profil transversal d'épaisseur du film à partir dudit profil de masse volumique du film et dudit profil transversal de masse surfacique du film étiré ;
- on peut commander lesdits actuateurs de réglage en réponse à un écart dudit profil d'épaisseur calculé par rapport à un profil d'épaisseur attendu ;
- ledit profil transversal caractéristique du film peut être un profil transversal de porosité du film ;
- on peut commander lesdits actuateurs de réglage en réponse à un écart du profil de porosité calculé par rapport à un profil de porosité attendu ; et
- on peut découper et retirer des bords du film en cours de formation, ladite unité de calcul pouvant déterminer ladite fonction de mapping du film à partir des positions transversales des bords du film découpé.

L'invention s'étend à un film obtenu selon le procédé de fabrication selon l'invention.

Description sommaire des dessins

La présente invention sera mieux comprise et d'autres avantages apparaîtront à la lecture de la description détaillée du mode de réalisation pris à titre d'exemple nullement limitatif et illustré par les dessins annexés, dans lesquels :

- la figure 1A illustre des profils transversaux de masse surfacique d'un film avant et après son étirage ;
- la figure 1B illustre des courbes des profils des figures 1A et 1B cumulés et la définition d'une fonction de mapping ;
- la figure 1C illustre la fabrication d'un film selon un procédé comprenant un étirage longitudinal et transversal dans une ligne de production ;
- la figure 2A a illustre une fonction de mapping du film de la figure 1C ;
- la figure 2B illustre un profil d'étirage dérivé de la fonction de mapping de la figure 2A ;
- la figure 3A illustre un profil de masse volumique du film de la figure 1A ;
- la figure 3B illustre un profil de porosité du film de la figure 1A ;
- la figure 4 illustre un procédé de fabrication du film de la figure 1C ;
- la figure 5 illustre un procédé de fabrication d'une membrane microporeuse comprenant plusieurs étapes d'étirage dans une ligne de production ; et
- la figure 6 illustre un procédé de fabrication de la membrane microporeuse de la figure 5.

Description d'un premier mode de réalisation du procédé selon l'invention

Dans le cadre de ce premier mode de réalisation, un film F1 dit film perlé est obtenu par extrusion d'un polymère en phase continue dans laquelle est dispersé un agent cavitant se présentant sous forme de particules solides, puis étirage longitudinal et transversal, simultané et/ou séquentiel, du film ainsi formé.

L'agent cavitant peut être de type minéral, par exemple des particules de carbonate de calcium, ou de type organique, par exemple du polybutylène téréphtalate (PBT), qui sont non miscibles dans le polymère de base du film, par exemple du polypropylène.

Dans un film perlé, des cavités sont formées autour des particules d'agent cavitant, donnant au film un aspect blanc ou nacré tout en réduisant sa masse volumique.

Le film F1, d'abord extrudé à travers une filière D d'extrusion équipée d'actuateurs Act de réglage d'épaisseur du film, est produit par un procédé comprenant un étirage transversal Str1 dans une zone Z0, le film étant déplacé selon une direction dite direction machine MD le long d'une ligne de production, comme illustré par la figure 1C.

Il est à noter que des étirages longitudinaux peuvent être appliqués au film concomitamment à l'étirage transversal Str1.

Le volume des cavités est fonction de l'étirage du film, et au moins au premier ordre, proportionnel à l'étirage du film, de sorte que la détermination d'un profil d'étirage permet de déduire un profil de porosité et un profil de masse volumique du film, comme détaillé par la suite.

Le profil d'étirage peut être calculé à partir des données de mesures de scanners équipés de capteurs de masse surfacique.

Afin de caractériser l'épaisseur du film, on utilise un premier scanner SCAN1 et un deuxième scanner SCAN2 comprenant chacun un capteur $Cap_{m.surf}$ de masse surfacique configuré pour balayer le film sur toute sa largeur, selon la direction transverse TD respectivement en amont et en aval de la zone Z0.

Les capteurs $Cap_{m.surf}$ de masse surfacique ont un fonctionnement basé sur la transmission d'un rayonnement X à travers le film à caractériser, transmission variant avec la masse surfacique de ce film, et comprennent une tête d'émission de rayonnement X et une tête de détection du rayonnement X traversant le film à caractériser.

Alternativement, le capteur de masse surfacique pourrait être basé, par exemple, sur la transmission ou la rétrodiffusion d'un rayonnement bêta ou autre et pourrait comprendre une tête d'émission de rayonnement bêta ou autre et une tête de détection de rayonnement bêta ou autre transmis ou rétrodiffusé par le film à caractériser.

D'une manière générale, les mesures peuvent être faites en transmission ou en rétrodiffusion de rayonnements électromagnétiques, d'ultrasons ou de particules.

Dans le cas de la rétrodiffusion, les têtes d'émission et les têtes de détection se situent d'un même côté du film, éventuellement intégrées dans un même logement.

Entre les scanners SCAN1 et SCAN2, le flux total de masse du film est invariant.

Afin de quantifier la distribution de l'agent cavitant dans le film, au moins un des scanners SCAN1et SCAN2 peut être équipé d'un capteur $Cap_{s.ag}$ capable de détecter la masse surfacique de l'agent cavitant contenue dans le film extrudé.

Un capteur $Cap_{s.ag}$ peut par exemple être basé sur l'absorption d'un rayonnement infrarouge par l'agent cavitant.

L'application de la loi de conservation de la masse entre les deux scanners SCAN1 et SCAN2 est illustrée par la figure 1C, qui montre des lignes de flux de matière dans le film soumis à l'étirage transversal Str1.

Le flux de matière entre le bord du film repéré par la coordonnée $X_{min}$ et une position $X$ quelconque au niveau du premier scanner SCAN1 doit être égal au flux de matière entre le bord du film repéré par la coordonnée $X'_{min}$ et la position correspondante $X'$ au niveau du deuxième scanner SCAN2, ce qui s'exprime par l'équation (1)

$$v.\int_{X_{min}}^{X} W_s(x)dx = v'.\int_{X'_{min}}^{X'} W'_s(x')dx' \qquad (1)$$

où $v$ et $v'$ représentent les vitesses de déplacement du film aux niveaux des premier et deuxième scanners respectivement, $W_S(x)$ et $W'_s(x')$ représentent les profils de masse surfacique (exprimés en général en g/m$^2$) du film aux positions transverses $x$ et $x'$ aux niveaux des premier et deuxième scanners respectivement.

L'équation 1 peut être réécrite indépendamment des vitesses si l'on écrit l'équation (2) équivalente de l'équation (1) pour toute la largeur du film

$$v.\int_{X_{min}}^{X_{max}} W_s(x)dx = v'.\int_{X'_{min}}^{X'_{max}} W'_s(x')dx' \qquad (2)$$

et que l'on divise (1) par (2) pour obtenir l'équation (3)

$$\int_{X_{min}}^{X} \frac{W_s(x)}{W_{s.tot}} dx = \int_{X'_{min}}^{X'} \frac{W'_s(x')}{W'_{s.tot}} dx' \qquad (3)$$

avec l'intégration $W_{s.tot}$ de la masse surfacique sur toute la largeur du film au niveau du premier scanner selon l'équation (4)

$$W_{s.tot} = \int_{X_{min}}^{X_{max}} W_s(x) dx \qquad (4)$$

et l'intégration $W'_{s.tot}$ de la masse surfacique sur toute la largeur du film, bords inclus, au niveau du deuxième scanner selon l'équation (5)

$$W'_{s.tot} = \int_{X'_{min}}^{X'_{max}} W'_s(x') dx' \qquad (5)$$

où les positions $X'_{min}$ et $X'_{max}$ sont connues puisque ce sont les positions du bord du film, et les masses surfaciques $W_S(x)$ et $W'_s(x')$ sont mesurées par les scanners.

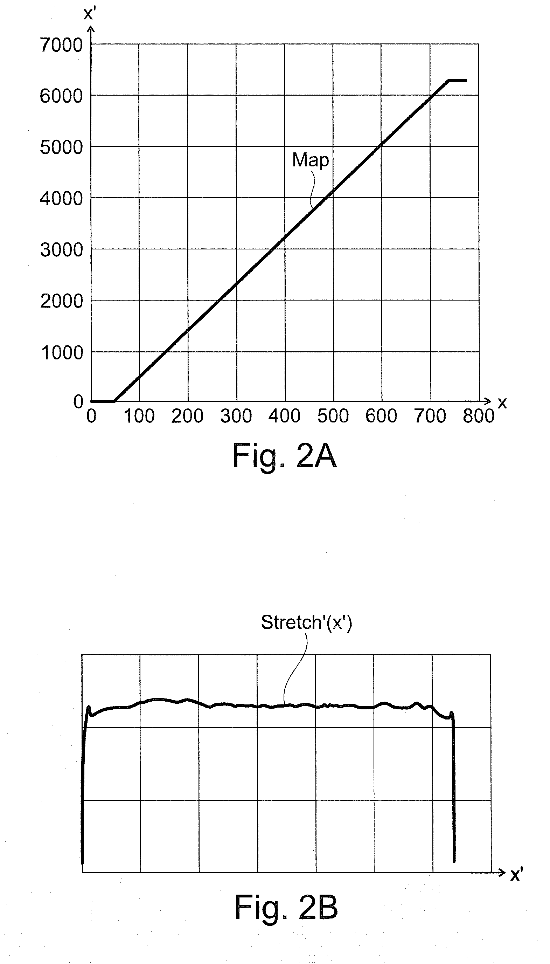

L'équation (3) établit une relation entre une position transversale *X* quelconque dans un film au niveau du premier scanner SCAN1 et sa position correspondante *X'* au niveau du deuxième scanner SCAN2 en définissant une relation univoque entre la position *X* et la position *X'*, la fonction de mapping, qui peut être visualisée graphiquement par la courbe Map au moyen du graphe de la figure 2A dans lequel l'axe des abscisses et l'axe des ordonnées représentent respectivement des positions transversales x et x' au niveau du premier scanner SCAN1 et au niveau du deuxième scanner SCAN2.

Pour une position transversale x' quelconque après l'étirage, l'étirage transversal *Stretch'TD(x')* au niveau du deuxième scanner s'exprime par l'équation (6)

$$Stretch'TD(x') = \frac{dx'}{dx} \qquad (6)$$

qui est la dérivée de la fonction de mapping.

Pour une position transversale x' quelconque après l'étirage, l'étirage total (longitudinal et transversal) *Stretch'(x')* au niveau du deuxième scanner s'exprime par l'équation (7)

$$Stretch'(x') = \frac{W_s(x)}{W'_s(x')} \qquad (7)$$

où x est la position correspondant à x' déterminée par la fonction de mapping en résolvant l'équation (3).

La figure 2B montre le profil *Stretch'(x')* d'étirage du film de la figure 1C au niveau du deuxième scanner SCAN2, déduit des mesures de masse surfacique par les capteurs de masse surfacique Cap$_{m.surf}$ et du traitement de l'équation (7) par des moyens de traitements mathématiques conventionnels mis en oeuvre par une unité de calcul informatique CALC.

Le profil de masse volumique $W'_v(x')$ du film étiré à une position transversale x' s'exprime par

$$W'_v(x') = \frac{W'_{pol}(x') + W'_{ag}(x')}{Vol'_{pol}(x') + Vol'_{ag}(x') + Vol'_{cav}(x')} \qquad (8)$$

où $W'_{pol}(x')$ représente la masse du polymère, $W'_{ag}(x')$ la masse de l'agent cavitant, $Vol'_{pol}(x')$ le volume du

polymère, $Vol'_{ag}(x')$ le volume d'agent cavitant et $Vol'_{cav}(x')$ le volume des cavités, considérés dans un volume élémentaire du film localisé par la coordonnée x' qui est représentative d'une position transversale après étirage du film, au niveau du deuxième scanner SCAN2.

L'équation (8) peut s'écrire sous la forme de l'équation (9)

$$W'_v(x') = \frac{\frac{W'_{pol}(x')+W'_{ag}(x')}{Vol'_{pol}(x')+Vol'_{ag}(x')}}{1+\frac{Vol'_{cav}(x')}{Vol'_{pol}(x')+Vol'_{ag}(x')}} \qquad (9)$$

et, le volume relatif des cavités dans le film étiré étant proportionnel selon une constante $\alpha$ de proportionnalité à la concentration en agent cavitant $C'_{ag}(x')$ et à l'étirage effectif *Stretch'(x')* au niveau de la coordonnée x', on peut exprimer le profil de masse volumique sous la forme de l'équation (10)

$$W'_v(x') = \frac{\frac{W'_{pol}(x')+W'_{ag}(x')}{Vol'_{pol}(x')+Vol'_{ag}(x')}}{1+\alpha.C'_{ag}(x').(Stretch'(x')-1)} \qquad (10)$$

où $\alpha$ représente les effets des caractéristiques moyennes du film, de la granulométrie de l'agent cavitant et de ses interactions avec le polymère, et *Stretch'(x')* dépend de la position transversale *x'*.

Le facteur (*Stretch'(x')* - 1) est introduit pour être cohérent avec la définition de l'étirage donnée plus haut, du fait que *Stretch'(x')* vaut 1 lorsqu'il n'y a ni étirage ni formation de cavités.

L'équation (10) peut s'écrire sous la forme de l'équation (11)

$$W'_v(x') = \frac{W'_{v.bulk}(x')}{1+\alpha.C'_{ag}(x').(Stretch'(x')-1)} \qquad (11)$$

où $W'_{v.bulk}(x')$ est définie par l'équation (12), correspondant à un profil de masse volumique du film non étiré à la position transversale x', c'est-à-dire en faisant abstraction de l'étirage et des cavités :

$$W'_{v.bulk}(x') = \frac{W'_{pol}(x')+W'_{ag}(x')}{Vol'_{pol}(x')+Vol'_{ag}(x')} \qquad (12)$$

et $C'_{ag}(x')$ représente la concentration massique de l'agent cavitant dans le film, définie par l'équation (13)

$$C'_{ag}(x') = \frac{W'_{s.ag}(x')}{W'_s(x')} \qquad (13)$$

où $W'_{s.ag}(x')$ est un profil de masse surfacique de l'agent cavitant au niveau du deuxième scanner SCAN2, mesuré par exemple par un capteur Cap$_{s.ag}$ équipant ce scanner.

A partir de l'équation (11), il est possible de déterminer le profil transversal de masse volumique $W'_v(x')$, puis d'en déduire des profils transversaux d'épaisseur et de porosité du film en cours de formation, par la détermination de (a) la fonction de mapping du film entre les scanners SCAN1 et SCAN2, (b) le profil d'étirage *Stretch'(x')*, (c) le profil $C'_{ag}(x')$ de concentration massique de l'agent cavitant, (d) le profil $W'_{v.bulk}(x')$ de masse volumique du film non étiré, et (e) la valeur de la constante $\alpha$.

En ce qui concerne les points (a) et (b), la fonction de mapping et le profil *Stretch'(x')* du film se déduisent des mesures de masse surfacique par les capteurs de masse surfacique Cap$_{m.surf}$ suivant les équations (3) et (7), respectivement.

En ce qui concerne le point (c), le profil $C'_{ag}(x')$ de la concentration en agent cavitant dans le film est donné par l'équation (13).

Dans le cas particulier où l'agent cavitant est distribué de façon homogène, son profil de concentration massique $C'_{ag}(x')$ ne dépend plus de la position, ce profil de concentration est plat à une valeur constante égale à la concentration moyenne de l'agent cavitant $C_{ag}$ dans le film, et il n'est plus nécessaire d'installer de capteur de masse surfacique de l'agent cavitant.

En ce qui concerne le point (d), la valeur $W'_{v.bulk}(x')$ se détermine à partir des masses volumiques du polymère et de l'agent cavitant, toutes deux connues du praticien, et de la concentration en agent cavitant par l'équation (14)

$$W'_{v.bulk}(x') = \frac{1}{(1-C'_{ag}(x'))/W_{v.pol}+C'_{ag}(x')/W_{v.ag}} \qquad (14)$$

où $W_{v.pol}$ et $W_{v.ag}$ représentent respectivement les masses volumiques du polymère et de l'agent cavitant, qui sont des grandeurs connues du praticien.

En ce qui concerne le point (e), on détermine la constante $\alpha$ en inversant l'équation (11) et en utilisant la concentration moyenne en agent cavitant $C_{ag}$ obtenue par le moyennage de l'équation (13), l'étirage moyen *Stretch'* obtenu par le moyennage de l'équation (7), la masse volumique moyenne correspondant à la masse volumique du film non étiré $W'_{v.bulk}$ obtenue par le moyennage de l'équation (14), et la masse volumique moyenne du film étiré $W'_v$ mesurée en laboratoire, ce qui mène à l'équation (15).

$$\alpha = \frac{W'_{v.bulk}-W'_v}{C_{ag}.(Stretch'-1).W_{v.ag}} \qquad (15)$$

On peut introduire la porosité $P'(x')$ du film après l'étirage, caractéristique essentielle de celui-ci et qui est définie comme le rapport du volume des cavités sur le volume total du film et s'exprime par l'équation (16)

$$P'(x') = \frac{Vol'_{cav}(x')}{Vol'_{pol}(x')+Vol'_{ag}(x')+Vol'_{cav}(x')} \qquad (16)$$

que l'on peut aussi dériver des équations (9) et (10) par l'équation (17)

$$P'(x') = 1 - \frac{1}{1+\alpha.C'_{ag}(x').(Stretch'(x')-1)} \qquad (17)$$

avec les notations définies plus haut.

Le profil d'épaisseur $T'(x')$ du film se calcule simplement par l'équation (18)

$$T'(x') = W'_s(x')/W'_v(x') \qquad (18)$$

où $W'_s(x')$ représente le profil de masse surfacique du film, obtenu directement des mesures effectuées par le deuxième scanner SCAN2, et $W'_v(x')$ représente le profil transversal de masse volumique du film au niveau du deuxième scanner, déduite des mesures des deux scanners situés de part et d'autre de la zone d'étirage, comme détaillé ci-dessus, en passant notamment par une étape de détermination de l'étirage local du film, non pas de manière empirique, mais, à la différence des procédés conventionnels, à partir des mesures de masse surfacique.

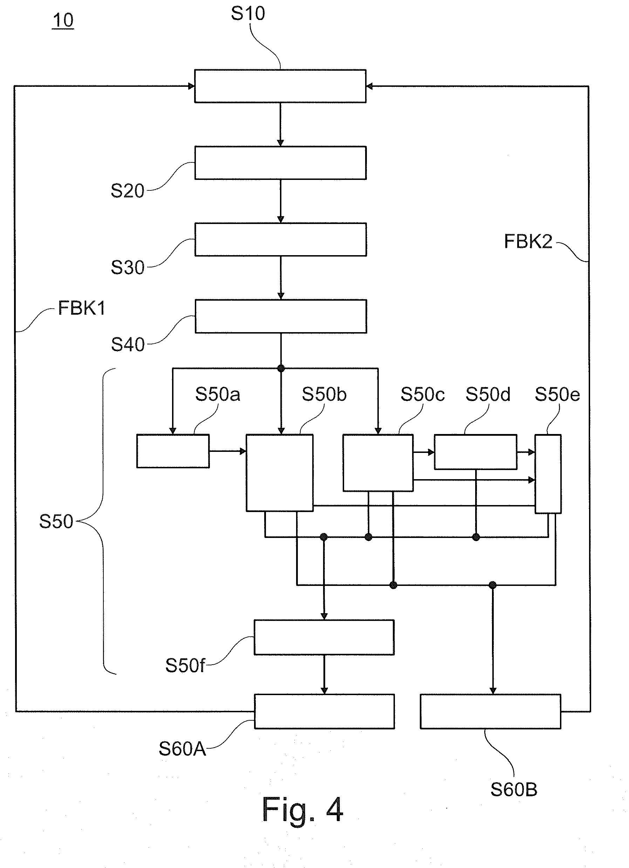

La fabrication du film inclut les étapes de détermination du profil d'épaisseur $T'(x')$ et/ou du profil de porosité $P'(x')$ suivant le procédé 10 illustré par la figure 4, décrit en suivant le traitement d'une section du film en déplacement.

En pratique, il s'agit d'un procédé se déroulant en continu où on prend en compte les temps de transport du film entre les deux scanners.

A une étape S10, le polymère et l'agent cavitant mélangé au polymère sont extrudés à travers la filière D pour former un film non étiré qui est convoyé selon la direction machine MD.

A une étape S20, un premier capteur $Cap_{m.surf}$ de masse surfacique, équipant le premier scanner SCAN1 et contrôlé par une unité de contrôle-commande C/C, est balayé au-dessus du film, mesure un premier profil transversal $W_s(x)$ de masse surfacique du film avant son étirage et stocke des données représentatives de ce premier profil de masse surfacique du film dans une mémoire informatique MEM dont le contenu est accessible à l'unité de calcul CALC.

A une étape S30, le film est étiré selon la direction machine MD et selon la direction transversale TD sensiblement perpendiculaire à la direction machine MD, de façon séquentielle ou simultanée.

A une étape S40, le deuxième capteur $Cap_{m.surf}$ de masse surfacique et le capteur $Cap_{s.ag}$ de masse surfacique d'agent cavitant, équipant le deuxième scanner SCAN2 et contrôlés par l'unité de contrôle-commande C/C, sont balayés au-dessus du film, mesurent respectivement un deuxième profil transversal $W_s'(x')$ de masse surfacique du film et un profil transversal $W_{s.ag}'(x')$ de masse surfacique d'agent cavitant dans le film après étirage et stockent des données représentatives de ces profils dans la mémoire informatique MEM.

A une étape S50, on détermine le profil transversal de masse volumique $W_v'(x')$ du film après l'étape S30 d'étirage, à partir du premier profil transversal $W_s(x)$ et du deuxième profil transversal $W_s'(x')$ de masse surfacique, mesurés respectivement aux étapes S20 et S40, par résolution de l'équation (11) au moyen d'un traitement par l'unité de calcul informatique CALC des données des profils transversaux stockées dans la mémoire informatique MEM, et de paramètres concernant les matériaux utilisés pour la fabrication (masses volumiques du polymère $W_{v.pol}$ et de l'agent cavitant $W_{v.ag}$, masse volumique moyenne du film étiré $W_v$), connus ou mesurables par des méthodes conventionnelles, et les caractéristiques du film considéré dans son ensemble, paramètres stockés dans la mémoire informatique MEM et accessibles à l'unité de calcul CALC.

L'étape S50 comprend la sous-étape S50a de détermination d'une table représentant la fonction de mapping à partir des profils de masse surfacique $W_S(x)$ et $W_s'(x')$ mesurés par les capteurs de masse surfacique $Cap_{m.surf}$ au cours des étapes S20 et S40, et de la résolution de l'équation (3) au moyen de l'unité de calcul informatique CALC, table enregistrée dans la mémoire informatique MEM.

L'étape S50 comprend en outre les sous-étapes S50b, S50c, S50d et S50e de détermination des éléments individuels du membre de droite de l'équation (11) au moyen de l'unité de calcul informatique CALC et des données des profils transversaux stockés dans la mémoire informatique MEM, puis la sous-étapes S50f de calcul du profil transversal de masse volumique $W_v'(x')$ proprement dit.

La sous-étape S50b consiste à déterminer le profil d'étirage $Stretch'(x')$ à partir des mesures de masse surfacique $W_S(x)$ et $W_s'(x')$ par les capteurs de masse surfacique $Cap_{m.surf}$, de la fonction de mapping déterminée à l'étape S50a et de la résolution de l'équation (7) au moyen de l'unité de calcul informatique CALC.

Optionnellement, la sous-étape S50b peut comprendre le calcul du profil d'étirage transversal $Stretch'TD(x')$ à partir de l'équation (6).

La sous-étape S50c consiste à déterminer le profil de concentration $C_{ag}'(x')$ en agent cavitant dans le film en appliquant l'équation (13) aux mesures effectuées par les capteurs de masse surfacique à l'étape S40.

La sous-étape S50d consiste à déterminer le profil de masse volumique $W_{v.bulk}'(x')$ du film non étiré comme expliqué plus haut, en résolvant l'équation (14) en utilisant le profil de concentration $C_{ag}'(x')$ déterminé à la sous-étape S50c, au moyen de l'unité de calcul informatique CALC.

La sous-étape S50e consiste à déterminer la constante $\alpha$ de proportionnalité, comme expliqué plus haut, à partir de l'équation (15) dans laquelle sont introduits le profil d'étirage $Stretch'(x')$ déterminé à l'étape S50b, le profil de

concentration $C'_{ag}(x')$ déterminé à la sous-étape S50c, et le profil de masse volumique $W'_{v.bulk}(x')$ du film non étiré obtenu à l'étape S50d au moyen de l'unité de calcul informatique CALC.

La sous-étape S50f consiste à utiliser les éléments individuels déterminés au cours des sous-étapes S50b à S50e pour déterminer le profil transversal de masse volumique $W'_v(x')$, défini par l'équation (11), au moyen de l'unité de calcul informatique CALC.

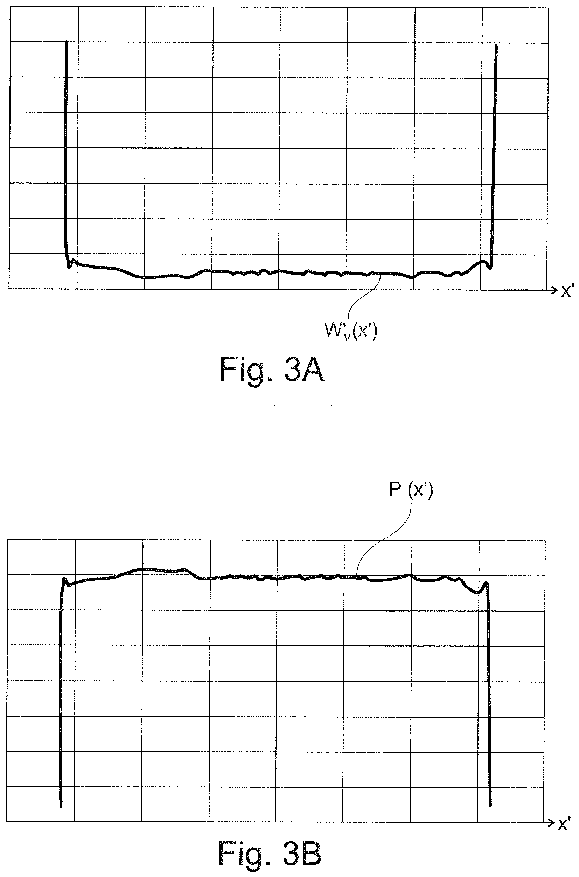

La figure 3A illustre un profil de masse volumique $W'_v(x')$ du film de la figure 1C, avec sur les bords du film, parties du film qui ne sont pas étirées comme mis en évidence par la figure 2B, la masse volumique valant sensiblement la masse volumique d'un film non étiré et donc ne comportant pas de cavités.

A une étape S60A, on détermine le profil transversal de l'épaisseur $T'(x')$ par résolution de l'équation (18) au moyen de l'unité de calcul CALC, le profil de masse surfacique $W'_s(x')$ du film et le profil de masse volumique $W'_v(x')$ du film au niveau du deuxième scanner étant connus à la suite des étapes S10 à S50.

Ce profil $T'(x')$ d'épaisseur est une caractéristique du film étiré et représente une source d'informations sur le procédé de fabrication du film, et peut être utilisé pour agir sur le procédé lui-même par un ajustement FBK1 d'un réglage de l'appareillage de formation du film en réponse à un écart du profil $T'(x')$ par rapport à un profil d'épaisseur attendu, comme illustré par la figure 4, manuellement par des réglages effectués par le praticien ou bien automatiquement par une boucle de rétrocontrôle liant le calculateur CALC à l'appareillage de formation du film.

Par exemple, l'extrusion du polymère formant le film se fait conventionnellement par poussée entre une lèvre fixe et une lèvre réglable de la filière D, l'épaisseur du film extrudé étant contrôlable par les actuateurs Act de la filière D, répartis le long de la lèvre réglable et dont l'action peut être ajustée individuellement en réponse à la mesure du profil transversal de l'épaisseur du film.

En particulier, un mapping du film déterminé à partir des profils de masse surfacique du film permet de déduire le ou les actionneurs qu'il est nécessaire d'ajuster en fonction du profil d'épaisseur du film.

Ainsi, l'invention est un procédé de fabrication d'un film comprenant le procédé de mesure de profil d'épaisseur décrit ci-dessus comme élément d'une boucle de rétroaction de contrôle du profil d'épaisseur du film, avec l'avantage d'un contrôle continu du procédé de fabrication.

Par ailleurs, à une étape S60B, on détermine le profil transversal de la porosité $P'(x')$ par résolution de l'équation (17) au moyen de l'unité de calcul CALC, les informations nécessaires étant connues suite aux étapes S10 à S40 et S50b, S50c et S50e.

La figure 3B illustre un profil de porosité $P'(x')$ du film de la figure 1C, avec une porosité très faible sur les bords du film, qui ne sont pas étirés et donc ne présentent pas ou peu de cavités.

Ce profil $P'(x')$ de porosité est source d'information sur le procédé de fabrication du film, et peut être utilisé pour agir sur le procédé lui-même par un ajustement FBK2 d'un réglage de l'appareillage de formation du film en réponse à un écart du profil $P'(x')$ par rapport à un profil de porosité attendu, comme illustré par la figure 4, manuellement par des réglages effectués par le praticien ou bien automatiquement par une boucle de rétrocontrôle liant le calculateur CALC à l'appareillage de formation du film.

Un procédé de régulation consiste à piloter des actuateurs de réglage de température de zones de température transversales dans le dispositif d'étirage inclus dans une ligne de production, en réponse à la mesure du profil transversal de porosité du film, de façon à moduler l'étirage transversal $Stretch'_{TD}(x')$ pour obtenir le profil de porosité souhaité.

Ainsi, le procédé de fabrication d'un film selon l'invention comprend le procédé de mesure de profil de porosité décrit ci-dessus comme élément d'une boucle de rétroaction de contrôle du profil de porosité du film, avec l'avantage d'un contrôle continu du procédé de fabrication.

Parmi les variations du procédé ci-dessus accessibles au praticien, on peut citer que le profil $W'_{s.ag}(x')$ d'agent cavitant au niveau du deuxième scanner SCAN2 peut se déduire d'une mesure du profil $W_{s.ag}(x)$ de l'agent cavitant au niveau du premier scanner SCAN1 au moyen de la fonction de mapping.

Dans une autre variation, on n'a pas d'étape d'étirage transversal sur la ligne de production du film, mais seulement une étape d'étirage longitudinal.

Cependant, l'étirage dans le sens machine peut conduire à un retrait transversal du film, et donc à un profil d'étirage avec des valeurs inférieures à un.

Les équations définies plus haut continuent de s'appliquer de la même façon, la seule différence dans cette variante étant que l'ajustement FBK2 n'est pas pertinent.

Description d'un deuxième mode de réalisation du procédé selon l'invention

Ce second mode de réalisation constitue un cas particulier du premier mode de réalisation en ce que l'agent cavitant peut être éliminé du film partiellement ou totalement en raison de la nature du film considéré et des traitements qui lui sont appliqués entre les scanners SCAN1 et SCAN2.

En conséquence, l'hypothèse d'une conservation du flux de la masse entre deux scanners faite dans le premier mode de réalisation devient caduque et il est nécessaire de prendre en compte la perte de masse dans le procédé et les calculs.

Ainsi, on peut se référer au premier mode de réalisation pour ce qui est de la démarche appliquée au procédé de fabrication et du type de matériel utilisé, en particulier pour les capteurs de masse surfacique et les actuateurs.

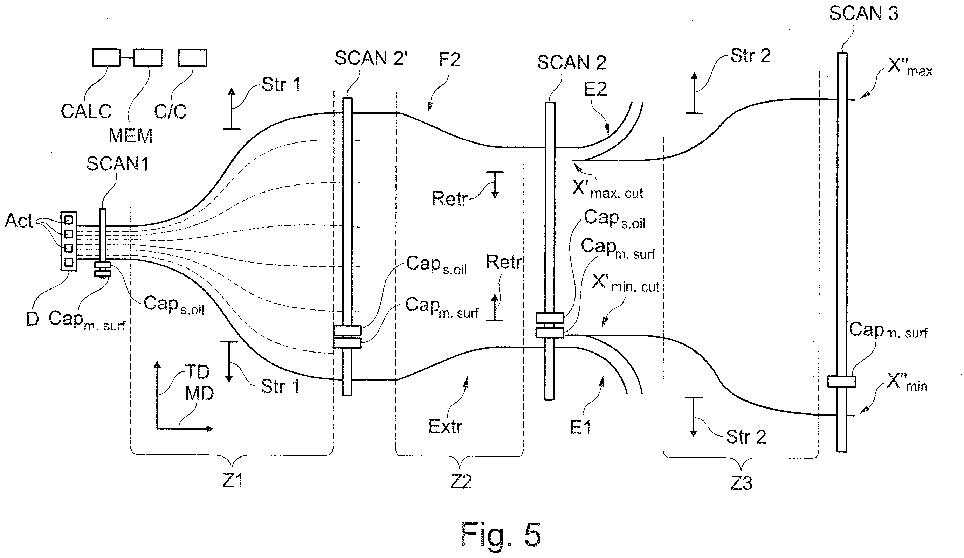

A titre d'exemple, dans ce deuxième mode de réalisation, le film considéré est une membrane polymère microporeuse qui peut être produite à partir d'un film F2 produit en continu par extrusion d'une solution polymère, le film étant déplacé selon une direction dite direction machine MD le long d'une ligne de production, comme illustré par la figure 5.

Une application particulière d'une membrane microporeuse est la fabrication de membranes dont le rôle est de séparer physiquement les cathodes et les anodes des cellules de batterie tout en permettant aux porteurs de charges électriques de circuler d'une anode à une cathode à travers les pores de la membrane.

Dans le cadre de ce deuxième mode de réalisation, on explique la détermination d'un profil d'étirage, d'un profil de porosité, d'un profil de masse volumique et d'un profil d'épaisseur d'une membrane microporeuse préparée à partir d'une solution polymère comprenant une résine polymère et une huile utilisée en tant qu'agent cavitant.

La résine polymère peut être une polyoléfine telle que du polyéthylène ou du polypropylène et l'agent cavitant peut être une huile de paraffine, comme décrit dans la demande internationale de brevet WO 2008/016174 et le brevet US 8,841,032.

Le film subit une première étape de procédé dans une première zone Z1 au cours de laquelle il est étiré selon un étirage Str1 et des cavités se forment au niveau des inclusions d'huile, cavités qui donneront les pores de la membrane microporeuse.

L'étirage Str1 combine un étirage longitudinal et un étirage transversal.

Au cours de la première étape, une partie de l'huile du film est généralement perdue.

Au cours d'une seconde étape de procédé, une étape Extr d'extraction d'huile dans une zone Z2 en aval de la zone Z1, le film étiré par le premier étirage Str1 passe dans un bain de solvant qui dissout l'huile contenue dans les pores, puis les pores sont vidés de l'huile par un mécanisme d'extraction du mélange solvant-huile.

Au cours de cette seconde étape de procédé, et en particulier lors de l'extraction du mélange, le film subit un retrait Retr.

Eventuellement, une seconde étape d'étirage Str2 mise en oeuvre au cours d'une troisième étape de procédé dans une zone Z3 en aval de la zone Z2 vise à corriger le retrait du film ayant pris place lors de l'extraction du mélange.

Comme dans le premier mode de réalisation, le volume des cavités est fonction de l'étirage du film, et, au moins au premier ordre, est proportionnel à l'étirage du film, de sorte que la détermination d'un profil d'étirage permet de déduire des profils de porosité, de masse volumique et d'épaisseur du film, comme détaillé par la suite.

En revanche, ce deuxième mode de réalisation se distingue du premier mode de réalisation en ce que l'agent cavitant (l'huile dans le cas présent) est retiré le plus complètement possible du film dans une zone de traitement entre deux mesures de masse surfacique.

En conséquence, la conservation du flux de masse, qui permet d'établir une fonction de mapping entre une position du film avant et une position du film après la zone de traitement considérée, ne s'applique plus à la masse surfacique totale mais uniquement à la masse du polymère seul.

Ainsi, les équations (1) à (7) restent valables, à condition de remplacer les profils de masse surfacique totale $W_s(x)$ et $W'_s(x')$ par les profils de masse surfacique du polymère $W_{s.pol}(x)$ et $W'_{s.pol}(x')$.

Dans ce mode de réalisation, des scanners SCAN1 et SCAN2 situés respectivement en amont de la première zone Z1 et en aval de la deuxième zone Z2 remplissent les mêmes fonctions que les scanners SCAN1 et SCAN2 du premier mode de réalisation, les zones Z1 et Z2 jouant ensemble le rôle de la zone Z0 du premier mode de réalisation.

Les capteurs $Cap_{m.surf}$ de masse surfacique mesurent des profils $W_s(x)$ et $W'_s(x')$ de masse surfacique totale, respectivement aux niveaux du premier scanner SCAN1 et du deuxième scanner SCAN2, et sont sensibles à l'ensemble de la matière sondée, ce qui inclut, en plus du polymère, l'huile dont la majeure partie est éliminée entre le premier et le deuxième scanner.

Ces capteurs mesurent donc la masse surfacique des constituants du film pris dans leur ensemble, pas seulement les masses surfaciques du polymère formant le film extrudé.

Afin de quantifier la perte en huile du film, le premier scanner SCAN1 peut être équipé d'un capteur $Cap_{s.oil}$ capable de détecter un profil de masse surfacique $W_{s.oil}(x)$ de l'huile seule contenue dans le film extrudé et le deuxième scanner SCAN2 peut être éventuellement équipé d'un autre capteur $Cap_{s.oil}$ pour la mesure de masse surfacique $W'_{s.oil}(x')$ des résidus d'huile après les étapes d'étirage et d'extraction, en particulier dans les bords du film, au niveau du deuxième scanner SCAN2.

Les profils de masse surfacique du polymère $W_{s.pol}(x)$ et $W'_{s.pol}(x')$ au niveau du premier scanner et du deuxième scanner sont respectivement obtenus par soustraction entre les profils de masse surfacique totaux et les profils de masse surfacique d'huile correspondant $W_{s.oil}(x)$ et $W'_{s.oil}(x')$ selon les équations (19) et (20), respective-ment.

$$W_{s.pol}(x) = W_s(x) - W_{s.oil}(x) \qquad (19)$$

$$W'_{s.pol}(x') = W'_s(x') - W'_{s.oil}(x') \qquad (20)$$

Alternativement et de manière équivalente, les scanners SCAN1 et/ou SCAN2 peuvent être équipés d'un ou plusieurs capteurs capables de détecter la masse surfacique du polymère seul contenu dans le film extrudé.
Un capteur $Cap_{s.oil}$ de détection de masse surfacique d'huile et un capteur de détection du polymère seul contenu dans le film peuvent par exemple être respectivement basés sur l'absorption de rayonnements infrarouges par l'huile et le polymère.
A partir de ces équations, on définit la fonction de mapping selon l'équation (21) de manière analogue au premier mode de réalisation avec les mêmes notations X, $X_{min}$, X' et $X'_{min}$

$$\int_{X_{min}}^{X} \frac{W_{s.pol}(x)}{W_{s.pol.tot}} dx = \int_{X'_{min}}^{X'} \frac{W'_{s.pol}(x')}{W'_{s.pol.tot}} dx' \qquad (21)$$

où $W_{s.pol.tot}$ et $W'_{s.pol.tot}$ sont respectivement les intégrales de profils de masses surfaciques $W_{s.pol}(x)$ et $W'_{s.pol}(x')$ sur l'ensemble de la largeur du film aux niveaux du premier et du deuxième scanner.
Afin d'obtenir l'expression de l'étirage, l'équation (7) peut être adaptée à ce second mode de réalisation pour donner l'équation (22).

$$Stretch'(x') = \frac{W_{s.pol}(x)}{W'_{s.pol}(x')} \qquad (22)$$

De manière analogue au premier mode de réalisation, on peut considérer que le volume des cavités est proportionnel à la concentration d'huile avant étirage.
Cependant, l'huile étant extraite autant que possible, une mesure de sa concentration au niveau du deuxième scanner SCAN2 n'apporte pas l'information nécessaire au calcul de la distribution des cavités.
En revanche, cette information peut être obtenue à partir de la concentration d'huile mesurée au niveau du premier scanner SCAN1 et de la fonction de mapping selon l'équation (21).
L'équation (23) exprime le profil de concentration d'huile $C_{oil}(x)$ au niveau de SCAN1, avant étirage

$$C_{oil}(x) = \frac{W_{s.oil}(x)}{W_s(x)} \qquad (23)$$

et la fonction de mapping (21) permet d'exprimer le profil de distribution $C'_{site}(x')$ des sites des cavités générées par la présence d'huile et l'étirage Str1 en amont de l'étape d'extraction d'huile de la zone Z2, exprimé par l'équation (24) .

$$C'_{site}(x') = C_{oil}(x) \quad (24)$$

Cette grandeur joue un rôle équivalent à $C'_{ag}(x')$ dans le premier mode de réalisation.

L'équation (11) peut être réécrite pour donner l'équation (25) qui exprime le profil de masse volumique du film avec ses cavités mais sans huile résiduelle

$$W'_v(x') = \frac{W_{v.pol}}{1+\alpha.C'_{site}(x').(Stretch'(x')-1)} \quad (25)$$

où en conséquence, la masse volumique du polymère $W_{v.pol}$, de valeur connue remplace $W'_{v.bulk}(x')$.

La constante $\alpha$ de proportionnalité s'exprime dans ce cas par l'équation (26), équivalente à l'équation (15) du premier mode de réalisation

$$\alpha = \frac{W_{v.pol}-W'_v}{C'_{site}.(Stretch'-1)W'_v} \quad (26)$$

où on détermine la concentration moyenne en sites de cavités $C'_{site}$ par moyennage de l'équation (24), l'étirage moyen *Stretch'* obtenu par le moyennage de l'équation (22) et la masse volumique moyenne du film étiré $W'_v$ mesurée en laboratoire.

De manière analogue au premier mode de réalisation, les profils d'épaisseur $T(x')$ et de porosité $P'(x')$ au niveau du deuxième scanner SCAN2 s'expriment respectivement par les équations (27) et(28).

$$T'(x') = W'_{s.pol}(x')/W'_v(x') \quad (27)$$

$$P'(x') = 1 - \frac{1}{1+\alpha.C'_{site}(x').(Stretch'(x')-1)} \quad (28)$$

La figure 5 illustre la troisième zone Z3 de procédé en aval de la deuxième zone Z2, avec une étape d'élimination par découpe de bords E1 et E2 du film F2 après passage au niveau du deuxième scanner SCAN2 et avant le second étirage Str2.

La figure 5 montre un troisième scanner SCAN3 équipé d'un troisième capteur de masse surfacique Cap_{m.surf} configuré pour balayer le film découpé sur toute sa largeur selon la direction transverse TD, en aval de la troisième zone Z3 du film.

En aval du deuxième scanner, des lames (non représentées sur la figure) découpent et évacuent les bords extérieurs E1 et E2 du film, de sorte que les bords du film découpé repérés par les coordonnées $X'_{min.cut}$ et $X'_{max.cut}$ correspondent à une réduction de la largeur du film.

Or, en raison de la découpe et l'évacuation des bords du film, la conservation du flux de masse du film ne concerne plus que la zone comprise entre les positions $X'_{min.cut}$ et $X'_{max.cut}$, ce qui amène à transformer l'équation (1) en équation (29)

$$v'.\int_{X'_{min.cut}}^{X'} W'_s(x')dx' = v''.\int_{X''_{min}}^{X''} W''_s(x'')dx'' \quad (29)$$

où $X_{min}^{"}$, $v"$, $W_s^{"}(x")$, et $X"$, représentent respectivement une position transverse d'un premier bord du film, la vitesse de déplacement du film, le profil de masse surfacique et une position transverse quelconque dans le film, chacun au niveau du troisième scanner SCAN3, les autres éléments de l'équation étant ceux définis plus haut.

L'intégration $W_{s.cut}^{'}$ de la masse surfacique sur toute la largeur du film après la découpe et avant l'étirage Str2 s'exprime par l'équation (30)

$$W_{s.cut}^{'} = \int_{X_{min.cut}^{'}}^{X_{max.cut}^{'}} W_s^{'}(x') dx' \qquad (30)$$

et l'intégration $W_{s.tot}^{"}$ de la masse surfacique sur toute la largeur du film au niveau du troisième scanner donne l'équation (31)

$$W_{s.tot}^{"} = \int_{X_{min}^{"}}^{X_{max}^{"}} W_s^{"}(x") dx" \qquad (31)$$

où $X_{max}^{"}$ représente la position transversale du deuxième bord du film au niveau du troisième scanner SCAN3.
L'équation qui permet de définir la fonction de mapping entre le deuxième scanner SCAN2 et le troisième scanner SCAN3 s'extrapole de l'équation (3) par l'équation (32).

$$\int_{X_{min.cut}^{'}}^{X'} \frac{W_s^{'}(x')}{W_{s.cut}^{'}} dx' = \int_{X_{min}^{"}}^{X^{"}} \frac{W_s^{"}(x")}{W_{s.tot}^{"}} dx" \qquad (32)$$

La fonction de mapping définie par l'équation (32) permet de faire correspondre une position transversale x" quelconque au niveau du troisième scanner SCAN3 à une position transversale x' au niveau du deuxième scanner SCAN2 après le retrait Retr, et donc de définir le profil de porosité P"(x") au niveau du troisième scanner à partir du profil de porosité au niveau du deuxième scanner.
La porosité locale demeure inchangée en raison de l'absence de formation de nouvelles cavités et parce que les cavités existantes et la totalité du volume du film sont déformés de la même manière ce qui donne l'équation (33)

$$P^{"}(x") = P'(x') \qquad (33)$$

où P"(x") est le profil de porosité du film au niveau du troisième scanner à une position transversale x".
Comme la porosité, la masse volumique locale reste inchangée en première approximation, et s'exprime donc par l'équation (34)

$$W_v^{"}(x") = W_v^{'}(x') \qquad (34)$$

où $W_v^{"}(x")$ est le profil de masse volumique au niveau du troisième scanner.
On en déduit alors le profil T"(x") d'épaisseur au niveau du troisième scanner, au moyen de l'équation (35).

$$T^{"}(x") = W_s^{"}(x") / W_v^{"}(x") \qquad (35)$$

A des fins explicatives, il a été considéré que la perte en solvant était nulle ou négligeable au niveau de la zone d'étirage Z3, mais il est naturellement possible de tenir compte d'une telle perte, de façon analogue à ce qui est proposé pour la première zone d'étirage Z1.
Le procédé de détermination d'un profil d'épaisseur du film au niveau du troisième scanner est similaire au procédé de détermination de profil d'épaisseur au niveau du deuxième scanner, mais comprend en outre une étape de stockage dans la mémoire informatique MEM des coordonnées transversales $X'_{min.cut}$ et $X'_{max.cut}$ des bords du film après la découpe et avant le deuxième étirage Str2 pour utilisation par l'unité de calcul CALC.

Toute découpe de bords de film pourrait être prise en compte par le praticien au moyen du procédé décrit ci-dessus, par exemple combiné au premier mode de réalisation ou au traitement du film F2 dans les zones Z1 et/ou Z2 du second mode de réalisation.

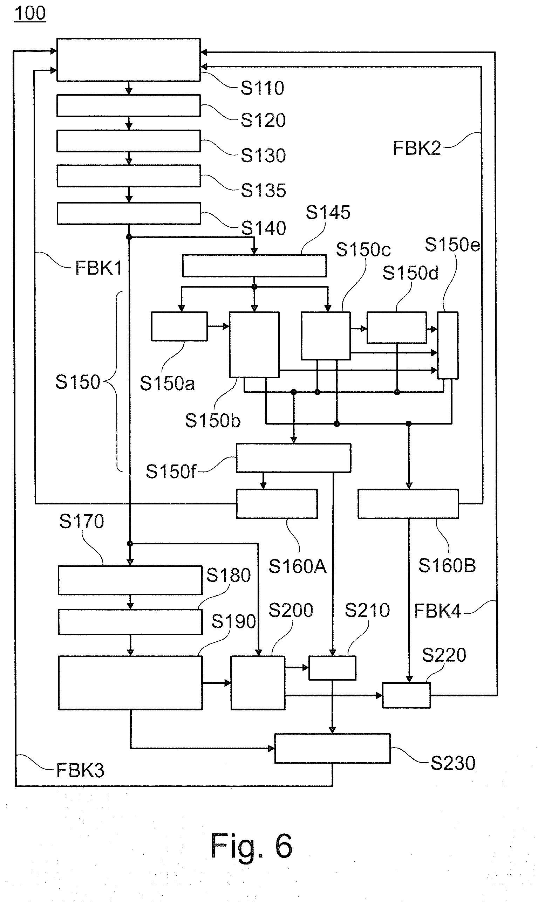

La fabrication du film inclut les étapes de détermination du profil d'épaisseur $T''(x'')$ et suit le procédé 100 illustré par la figure 6, décrit en suivant le traitement d'une section du film en déplacement.

En pratique, il s'agit d'un procédé se déroulant en continu où on prend en compte les temps de transport du film entre les différents scanners.

A une étape S110, le polymère et l'huile mélangée au polymère sont extrudés à travers la filière D pour former un film non étiré qui est convoyé selon la direction machine MD.

A une étape S120, un premier capteur $Cap_{m.surf}$ de masse surfacique totale et un capteur $Cap_{s.oil}$ de masse surfacique d'huile équipant le premier scanner SCAN1 et contrôlés par une unité de contrôle-commande C/C sont balayés au-dessus du film, mesurent respectivement un premier profil transversal $W_s(x)$ de masse surfacique totale du film et un premier profil transversal $W_{s.oil}(x)$ de masse surfacique d'huile dans le film, avant l'étirage Str1 du film, et stockent des données représentatives de ces premiers profils dans une mémoire informatique MEM.

A une étape S130, le film est étiré selon la direction transversale TD sensiblement perpendiculaire à la direction machine MD puis l'huile est extraite du film aussi complètement que possible à une étape S135.

A une étape S140 suivant l'étape S130, un deuxième capteur $Cap_{m.surf}$ de masse surfacique totale et un capteur $Cap_{s.oil}$ de masse surfacique d'huile équipant le deuxième scanner SCAN2 et contrôlés par l'unité de contrôle-commande C/C sont balayés au-dessus du film, mesurent respectivement un deuxième profil transversal $W'_s(x')$ de masse surfacique totale du film et un deuxième profil transversal $W'_{s.oil}(x')$ de masse surfacique d'huile dans le film après l'étirage Str1 du film et stockent des données représentatives de ces profils dans la mémoire informatique MEM.

A une étape S145, l'unité de calcul CALC calcule (1) le profil transversal de masse surfacique du polymère seul $W_{s.pol}(x)$ au niveau du premier scanner SCAN1 en soustrayant le premier profil transversal $W_{s.oil}(x)$ de masse surfacique d'huile du premier profil transversal $W_s(x)$ de masse surfacique totale du film et (2) le profil transversal $W'_{s.pol}(x')$ de masse surfacique du polymère seul au niveau du deuxième scanner SCAN2 en soustrayant le deuxième profil transversal $W'_{s.oil}(x')$ de masse surfacique d'huile dans le film du deuxième profil transversal $W'_s(x')$ de masse surfacique totale du film, et on stocke ces profils dans la mémoire informatique MEM.

A une étape S150, l'unité de calcul CALC calcule le profil transversal de masse volumique $W'_v(x')$ du film après l'étape S130 d'étirage Str1, à partir du premier profil transversal $W_s(x)$ et du deuxième profil transversal $W'_s(x')$ de masse surfacique, mesurés respectivement aux étapes S120 et S140, par résolution de l'équation (25) au moyen d'un traitement par l'unité de calcul informatique CALC des données des profils transversaux stockés dans la mémoire informatique MEM, et de paramètres connus ou mesurables par des méthodes conventionnelles concernant les matériaux utilisés pour la fabrication et les caractéristiques de celui-ci considéré dans son ensemble, paramètres stockés dans la mémoire informatique MEM accessibles à l'unité de calcul CALC.

L'étape S150 comprend la sous-étape S150a de détermination d'une table représentant la fonction de mapping à partir des profils transversaux de masse surfacique $W_{s.pol}(x)$ et $W'_{s.pol}(x')$ du polymère seul obtenus à l'étape S145 et de la résolution de l'équation (21) au moyen de l'unité de calcul informatique CALC.

L'étape S150 comprend en outre les sous-étapes S150b, S150c, S150d et S150e de détermination des éléments individuels du membre de droite de l'équation (25) au moyen de l'unité de calcul informatique CALC, des données des profils transversaux stockés dans la mémoire informatique MEM, puis la sous-étape S150f de calcul du profil transversal de masse volumique $W'_v(x')$ proprement dit.

La sous-étape S150b consiste à déterminer le profil d'étirage *Stretch'(x')* à partir des profils transversaux de masse surfacique du polymère seul obtenus à l'étape S145, de la fonction de mapping déterminée à l'étape 150a et de la résolution de l'équation (22) au moyen de l'unité de calcul informatique CALC.

La sous-étape S150c consiste à déterminer le profil de distribution $C'_{site}(x')$ des sites des cavités générées dans le film en appliquant l'équation (23) aux mesures effectuées par les capteurs de masse surfacique à l'étape S120.

Dans ce mode de réalisation, l'étape S50d du procédé du premier mode de réalisation n'a pas d'équivalent en termes de calcul puisque la masse volumique du polymère $W_{v.pol}$ est une donnée connue.

L'étape S150d du deuxième mode de réalisation consiste pour l'unité de calcul CALC à récupérer la valeur de la masse volumique du polymère $W_{v.pol}$ stockée dans la mémoire informatique MEM.

La sous-étape S150e consiste à déterminer la constante $\alpha$ de proportionnalité, à partir de l'équation (26) dans laquelle sont introduites les valeurs moyennées *Stretch'* et $C'_{site}$ des profils établis respectivement aux étapes S150b et S150c, et d'une valeur $W'_v$ de masse volumique du film obtenue par des mesures en laboratoire, au moyen de l'unité de calcul informatique CALC, la masse volumique du polymère $W_{v.pol}$ étant connue.

La sous-étape S150f consiste à utiliser les éléments individuels déterminés au cours des sous-étapes S150b, S150c et S150e pour déterminer le profil transversal de masse volumique $W'_v(x')$ par l'équation (25) au moyen de l'unité de calcul informatique CALC.

A une étape S160A, on détermine le profil transversal de l'épaisseur $T'(x')$ par résolution de l'équation (29) au moyen de l'unité de calcul CALC, la masse surfacique $W'_{s.pol}(x')$ du film et la masse volumique $W'_v(x')$ du film au niveau du deuxième scanner étant connues à la suite des étapes S110 à S150.

Par ailleurs, à une étape S160B, on détermine le profil transversal de la porosité $P'(x')$ par résolution de l'équation (28) au moyen de l'unité de calcul CALC, les informations nécessaires étant connues suite aux étapes S110 à S150.

De la même manière que les profils $T'(x')$ d'épaisseur et $P'(x')$ de porosité au niveau du deuxième scanner SCAN2 dans le premier mode de réalisation, les profils $T'(x')$ d'épaisseur et $P'(x')$ de porosité du deuxième mode de réalisation peuvent être utilisés pour agir sur le procédé de fabrication par des ajustements de réglage de l'appareillage de formation du film en réponse à des écartements de ces profils à des profils attendus, FBK1 et FBK2 respectivement, comme illustré par la figure 6.

A une étape S170, les bords du film sont découpés et les positions des nouveaux bords du film après découpe sont enregistrées dans la mémoire MEM par l'unité de contrôle/commande C/C, les positions des couteaux de découpe étant connues.

A une étape S180, on procède à un second étirage Str2 du film en zone Z3.

A une étape S190, un troisième capteur $Cap_{m.surf}$ de masse surfacique totale équipant le troisième scanner SCAN3 et contrôlé par une unité de contrôle-commande C/C, est balayé au-dessus du film, mesure un troisième profil transversal $W''_s(x'')$ de masse surfacique totale du film après le second étirage Str2 et stocke des données représentatives de ce troisième profil de masse surfacique du film dans la mémoire informatique MEM, selon un procédé analogue à celui des étapes S120 et S140.

A une étape S200, on détermine une table représentant la fonction de mapping à partir du deuxième profil transversal $W'_s(x')$ et du troisième profil transversal $W''_s(x'')$ de masse surfacique, mesurés respectivement aux étapes S140 et S190 et de la résolution de l'équation (32) au moyen de l'unité de calcul informatique CALC.

A une étape S210, on détermine le profil transversal de masse volumique $W''_v(x'')$ du film après l'étape S180 d'étirage Str2 à partir du profil de masse volumique au niveau de deuxième scanner $W'_v(x')$ déterminé à l'étape S150 et de la table représentant la fonction de mapping déterminée à l'étape S200, par résolution de l'équation (34) au moyen d'un traitement par l'unité de calcul informatique CALC.

A une étape S220, on détermine le profil transversal de porosité $P''(x'')$ du film au niveau du troisième scanner, à partir du profil de porosité $P'(x')$ au niveau du deuxième scanner déterminé à l'étape S160B et de la fonction de mapping déterminée à l'étape S200, par résolution de l'équation (33) au moyen d'un traitement par l'unité de calcul informatique CALC.

A une étape S230, on détermine le profil transversal de l'épaisseur $T''(x'')$ par résolution de l'équation (35) au moyen de l'unité de calcul CALC, la masse surfacique $W''_s(x'')$ du film et la masse volumique $W''_v(x'')$ du film au niveau du troisième scanner étant respectivement connues à la suite des étapes S190 et S210.

De la même manière que les profils $T'(x')$ d'épaisseur et $P'(x')$ de porosité au niveau du deuxième scanner SCAN2, les profils d'épaisseur $T''(x'')$ et de porosité $P''(x'')$ peuvent être utilisés pour agir sur le procédé lui-même par des ajustements FBK3 et FBK4 de réglage de l'appareillage de formation du film en réponse à, respectivement, des écarts de ces profils par rapport à des profils d'épaisseur et de porosité attendus, comme illustré par la figure 6.

Optionnellement et de manière simplifiée, certains cas de figure autorisent une approximation qui consiste à considérer que la teneur massique $C_{oil}$ en huile du film extrudé est indépendante de la position transversale, ce qui nous permet de remplacer l'équation (19) par l'équation (36) .

$$W_{s.pol}(x) = (1 - C_{oil}).W_s(x) \qquad (36)$$

De manière similaire, on peut aussi considérer que la teneur d'huile résiduelle après l'étape d'extraction de la zone Z2 est nulle, ce qui nous permet de remplacer $W'_{s.pol}(x')$ par $W'_s(x')$ .

Ainsi, nous obtenons une variation du second mode de réalisation, dans laquelle la masse volumique, l'épaisseur et la porosité s'obtiennent sans avoir recours à l'utilisation de capteurs $Cap_{s.oil}$.

Toujours optionnellement, un quatrième scanner SCAN2' équipé de capteurs $Cap_{m.surf}$ de masse surfacique totale et $Cap_{s.oil}$ de masse surfacique d'huile pourrait être placé entre les zones Z1 et Z2 afin de caractériser le premier étirage Str1 ainsi que la perte d'huile au cours de cet étirage.

Utiliser ce quatrième scanner peut procurer les avantages suivants.

En appliquant le jeu d'équations (21) à (28) entre les scanners SCAN1 et SCAN2', on peut calculer beaucoup plus rapidement une première approximation du profil de porosité et d'épaisseur dans la mesure où le procédé d'extraction de la zone Z2 ajoute un délai à la suite du procédé de la zone Z1.

Cela permet une rétroaction plus rapide sur le procédé que si on utilisait les résultats du scanner SCAN2 ou du scanner SCAN3.

En outre, le scanner SCAN2' permet de déterminer la perte d'huile au cours du procédé de la zone Z1 et de caractériser la qualité de l'étirage Str1.

L'agent cavitant est de l'huile dans ce mode de réalisation, mais l'invention ne se limite pas à ce matériau.

Dans le cas où un agent cavitant autre que de l'huile serait employé, le praticien utilisera des capteurs de masses surfacique adaptés.

Les modes de réalisation décrits ci-dessus s'appliquent à une catégorie de films que l'on appelle communément films perlés et aux membranes de séparateur de batteries dites BSF pour Battery Separator Films, mais l'invention peut également s'appliquer à tout autre type de membrane poreuse, tel que, par exemple, les membranes respirantes ou les membranes des piles à combustible.

Il va de soi que la présente invention ne saurait être limitée aux modes de réalisation exposés plus haut, susceptibles de subir des modifications sans pour autant sortir du cadre de l'invention.

**Revendications**

1. Procédé de fabrication d'un film (F1 ; F2) comportant des cavités et formé à partir d'un polymère dans lequel un agent cavitant est dispersé, ledit procédé comprenant une étape d'extrusion du polymère dans une ligne de production équipée d'actuateurs (Act) de réglage de caractéristiques du film extrudé et une étape (S30 ; S130) d'étirage (Str1 ; Str2) du film ainsi qu'une étape (S50a, S150a) consistant à établir une fonction de mapping du film, **caractérisé en ce que** :

   - un premier capteur ($Cap_{m.surf}$) de masse surfacique mesure (S20 ; S120) un profil transversal de masse surfacique du film non étiré ;
   - un deuxième capteur ($Cap_{m.surf}$) de masse surfacique mesure (S40 ; S140) un profil transversal de masse surfacique du film étiré par ledit étirage (Str1 ; Str2) ;
   - une unité de calcul (CALC) calcule (S50a, S150a) ladite fonction de mapping du film étiré à partir desdits profils transversaux de masse surfacique ;
   - ladite unité de calcul (CALC) calcule (S50b, S150b) un profil d'étirage du film étiré, à partir de ladite fonction de mapping et desdits profils transversaux de masse surfacique ;
   - ladite unité de calcul (CALC) calcule (S50f, S60B ; S150f, S150B) un profil transversal caractéristique du film à partir dudit profil d'étirage et d'un profil transversal de concentration massique de l'agent cavitant dans le film étiré qui permet de prendre en compte la répartition des cavités dans le film, et
   - on commande (FBK1, FBK2, FBK3, FBK4) lesdits actuateurs de réglage en fonction dudit profil transversal caractéristique.

2. Le procédé de fabrication d'un film selon la revendication 1, **caractérisé en ce que** ledit profil transversal de ladite concentration massique de l'agent cavitant est déduite (S50c) dudit profil transversal de masse surfacique du film étiré et d'un profil de masse surfacique d'agent cavitant mesuré par un capteur de masse surfacique d'agent cavitant ($Cap_{s.ag}$ ; $Cap_{s.oil}$).

3. Le procédé de fabrication d'un film selon la revendication 1, **caractérisé en ce que** :

   - un profil de masse surfacique d'agent cavitant du film non étiré est mesuré par un capteur de masse surfacique d'agent cavitant ($Cap_{s.ag}$ ; $Cap_{s.oil}$) ;
   - un profil transversal de concentration massique de l'agent cavitant du film non étiré est déduit dudit profil de masse surfacique d'agent cavitant et dudit profil transversal de masse surfacique du film non étiré ; et
   - on remplace ledit profil transversal de concentration massique de l'agent cavitant dans le film étiré par l'application de la fonction de mapping audit profil transversal de concentration massique de l'agent cavitant du film non étiré.

4. Le procédé de fabrication d'un film selon la revendication 1, **caractérisé en ce que** ledit profil transversal de concentration massique de l'agent cavitant est assimilé à la concentration moyenne de l'agent cavitant dans le film.

5. Le procédé de fabrication d'un film selon l'une quelconque des revendications 1, 3 et 4, **caractérisé en ce que** :

   - le film subit une perte en agent cavitant entre les deux mesures de profil transversaux de masse surfacique ;
   - un premier capteur ($Cap_{s.oil}$) de masse surfacique d'agent cavitant mesure (S120) un profil transversal de masse surfacique en agent cavitant du film non étiré ;
   - un deuxième capteur ($Cap_{s.oil}$) de masse surfacique d'agent cavitant mesure (S140) un profil transversal de masse surfacique d'agent cavitant du film étiré ;
   - ladite unité de calcul (CALC) calcule (S145) des profils transversaux de la masse surfacique du film en polymère seul par soustraction des profils transversaux de masse surfacique d'agent cavitant des profils transversaux de masse surfacique du film ; et
   - ladite unité de calcul (CALC) calcule ladite fonction de mapping (S150a) à partir des profils transversaux de masse surfacique du film en polymère seul.

6. Le procédé de fabrication d'un film selon la revendication 5, **caractérisé en ce que** ladite étape (S130) d'étirage (Str1) du film se déroule dans une première zone (Z1) et est suivie d'une étape (S135) d'extraction (Extr) d'agent cavitant du film dans une deuxième zone (Z2) en aval de la première zone (Z1), le deuxième capteur ($Cap_{s.oil}$) de masse surfacique mesurant ledit profil transversal de masse surfacique d'agent cavitant du film étiré en aval de la première zone (Z1) et en amont de la deuxième zone (Z2).

7. Le procédé de fabrication d'un film selon l'une quelconque des revendications 1 à 6, **caractérisé en ce que** ledit profil transversal caractéristique du film est un profil transversal de masse volumique du film.

8. Le procédé de fabrication d'un film selon la revendication 7, **caractérisé en ce que** ladite unité de calcul (CALC) calcule (S60A, S160A) un profil transversal d'épaisseur du film (F1 ; F2) à partir dudit profil de masse volumique du film et dudit profil transversal de masse surfacique du film étiré.

9. Le procédé de fabrication d'un film selon la revendication 8, **caractérisé en ce qu'**on commande (FBK1, FBK3) lesdits actuateurs de réglage en réponse à un écart dudit profil d'épaisseur calculé par rapport à un profil d'épaisseur attendu.

10. Le procédé de fabrication d'un film selon l'une quelconque des revendications 1 à 6, **caractérisé en ce que** ledit profil transversal caractéristique du film est un profil transversal de porosité du film.

11. Le procédé de fabrication d'un film selon la revendication 10, **caractérisé en ce qu'**on commande (FBK2, FBK4) lesdits actuateurs de réglage en réponse à un écart du profil de porosité calculé par rapport à un profil de porosité attendu.

12. Le procédé de fabrication d'un film selon l'une quelconque des revendications 1 à 11, **caractérisé en ce qu'**on découpe et retire des bords (E1, E2) du film (F2) en cours de formation, ladite unité de calcul déterminant (S200) ladite fonction de mapping du film (F2) à partir des positions transversales ( $X'_{min.cut}$ , $X'_{max.cut}$ ) des bords du film découpé.

**Patentansprüche**

1. Verfahren zum Herstellen einer Folie (F1; F2), die Hohlräume aufweist und aus einem Polymer gebildet ist, in dem ein Hohlraummittel dispergiert ist, wobei das Verfahren einen Schritt eines Extrudierens des Polymers in einer Fertigungsstraße, die mit Aktuatoren (Act) für eine Merkmalanpassung der extrudierten Folie ausgestattet ist, und einen Schritt (S30; S130) eines Streckens (Str1; Str2) der Folie sowie einen Schritt (S50a, S150a), der darin besteht, eine Abbildungsfunktion der Folie zu erstellen, umfasst, **dadurch gekennzeichnet, dass:**

   - ein erster Massenbelegungssensor (Cap$_{m.surf}$) ein Querprofil der Massenbelegung der nicht gestreckten Folie misst (S20; S120);
   - ein zweiter Massenbelegungssensor (Cap$_{m.surf}$) ein Querprofil der Massenbelegung der durch die Streckung (Str1; Str2) gestreckten Folie misst (S40; S140);
   - eine Recheneinheit (CALC) die Abbildungsfunktion der gestreckten Folie aus den Querprofilen der Massenbelegung berechnet (S50a, S150a);
   - die Recheneinheit (CALC) ein Streckprofil der gestreckten Folie aus der Abbildungsfunktion und den Querprofilen der Massenbelegung berechnet (S50b, S150b);
   - die Recheneinheit (CALC) ein kennzeichnendes Querprofil der Folie aus dem Streckprofil und einem Querprofil der Massenkonzentration des Hohlraummittels in der gestreckten Folie berechnet (S50f, S60B; S150f, S150B), das es ermöglicht, die Verteilung der Hohlräume in der Folie zu berücksichtigen, und
   - die Anpassungsaktuatoren in Abhängigkeit von dem kennzeichnenden Querprofil betätigt werden (FBK1, FBK2, FBK3, FBK4).

2. Verfahren zum Herstellen einer Folie nach Anspruch 1,
   **dadurch gekennzeichnet, dass** das Querprofil der Massenkonzentration des Hohlraummittels von dem Querprofil der Massenbelegung der gestreckten Folie und einem Massenbelegungsprofil des Hohlraummittels, das durch einen Massenbelegungssensor eines Hohlraummittels (Cap$_{s.ag}$; Cap$_{s.oil}$) gemessen wird, abgeleitet wird (S50c) •

3. Verfahren zum Herstellen einer Folie nach Anspruch 1,
   **dadurch gekennzeichnet, dass:**

   - ein Massenbelegungsprofil eines Hohlraummittels der nicht gestreckten Folie durch einen Massenbelegungssensor des Hohlraummittels (Cap$_{s.ag}$; Cap$_{s.oil}$) gemessen wird;
   - ein Querprofil der Massenkonzentration des Hohlraummittels der nicht gestreckten Folie von dem Massenbelegungsprofil des Hohlraummittels und dem Querprofil der Massenbelegung der nicht gestreckten Folie abgeleitet wird; und
   - das Querprofil der Massenkonzentration des Hohlraummittels in der gestreckten Folie durch Anwenden der Abbildungsfunktion auf das Querprofil der Massenkonzentration des Hohlraummittels der nicht gestreckten Folie ersetzt wird.

4. Verfahren zum Herstellen einer Folie nach Anspruch 1,
   **dadurch gekennzeichnet, dass** das Querprofil der Massenkonzentration des Hohlraummittels der durchschnittlichen Konzentration des Hohlraummittels in der Folie angeglichen wird.

5. Verfahren zum Herstellen einer Folie nach den Ansprüchen 1, 3 und 4, **dadurch gekennzeichnet, dass:**

   - die Folie einen Hohlraummittelverlust zwischen den beiden Querprofilmessungen der Massenbelegung erfährt;
   - ein erster Massenbelegungssensor (Cap$_{s.oil}$) eines Hohlraummittels ein Querprofil der Massenbelegung des Hohlraummittels der nicht gestreckten Folie misst (S120);
   - ein zweiter Massenbelegungssensor (Cap$_{s.oil}$) eines Hohlraummittels ein Querprofil der Massenbelegung des Hohlraummittels der gestreckten Folie misst (S140);
   - die Recheneinheit (CALC) Querprofile der Massenbelegung der Polymerfolie allein durch Subtrahieren der Querprofile der Massenbelegung des Hohlraummittels von den Querprofilen der Massenbelegung der Folie berechnet (S145); und
   - die Recheneinheit (CALC) die Abbildungsfunktion (S150a) aus den Querprofilen der Massenbelegung der Polymerfolie allein berechnet.

6. Verfahren zum Herstellen einer Folie nach Anspruch 5,
   **dadurch gekennzeichnet, dass** der Schritt (S130) des Streckens (Str1) der Folie in einer ersten Zone (Z1) erfolgt und von einem Schritt (S135) eines Extrahierens (Extr) des Hohlraummittels der Folie in einer zweiten Zone (Z2) stromabwärts der ersten Zone (Z1) gefolgt wird, wobei der zweite Massenbelegungssensor (Cap$_{s.oil}$) das Querprofil der Massenbelegung des Hohlraummittels der stromabwärts der ersten Zone (Z1) und stromaufwärts der zweiten Zone (Z2) gestreckten Folie misst.

7. Verfahren zum Herstellen einer Folie nach einem der Ansprüche 1 bis 6, **dadurch gekennzeichnet, dass** das kennzeichnende Querprofil der Folie ein Querprofil der volumenbezogenen Masse der Folie ist.

8. Verfahren zum Herstellen einer Folie nach Anspruch 7,
**dadurch gekennzeichnet, dass** die Recheneinheit (CALC) ein Querprofil der Dicke der Folie (F1, F2) aus dem Profil der volumenbezogenen Masse der Folie und dem Querprofil der Massenbelegung der gestreckten Folie berechnet (S60A, S160A).

9. Verfahren zum Herstellen einer Folie nach Anspruch 8,
**dadurch gekennzeichnet, dass** als Reaktion auf eine Abweichung des berechneten Dickenprofils relativ zu einem erwarteten Dickenprofil die Anpassungsaktuatoren (FBK1, FBK3) betätigt werden.

10. Verfahren zum Herstellen einer Folie nach einem der Ansprüche 1 bis 6, **dadurch gekennzeichnet, dass** das kennzeichnende Querprofil der Folie ein Querprofil einer Folienporosität ist.

11. Verfahren zum Herstellen einer Folie nach Anspruch 10,
**dadurch gekennzeichnet, dass** als Reaktion auf eine Abweichung des berechneten Porositätsprofils relativ zu einem erwarteten Porositätsprofil die Anpassungsaktuatoren betätigt werden (FBK2, FBK4).

12. Verfahren zum Herstellen einer Folie nach einem der Ansprüche 1 bis 11, **dadurch gekennzeichnet, dass** Kanten (E1, E2) der Folie (F2) während der Ausbildung geschnitten und entfernt werden, wobei die Recheneinheit die Abbildungsfunktion der Folie (F2) aus den Querpositionen ($X'_{min.cut}$, $X'_{max.cut}$) der Kanten der geschnittenen Folie bestimmt (S200).

## Claims

1. Method for manufacturing a film (F1; F2) comprising cavities and formed from a polymer in which a cavitating agent is dispersed, said method comprising a step of extruding the polymer in a production line equipped with actuators (Act) for adjusting the features of the extruded film and a step (S30; S130) of stretching (Str1; Str2) the film as well as a step (S50a, S150a) consisting in establishing a film mapping function, **characterized in that:**

    - a first mass-per-unit area sensor (Cap$_{m.surf}$) measures (S20; S120) a mass-per-unit area cross-sectional profile of the unstretched film;
    - a second mass-per-unit area sensor (Cap$_{m.surf}$) measures (S40; S140) a mass-per-unit area cross-sectional profile of the film stretched by said stretching (Str1; Str2);
    - a computing unit (CALC) computes (S50a, S150a) said mapping function of the stretched film from said mass-per-unit area cross-sectional profiles;
    - said computing unit (CALC) computes (S50b, S150b) a stretching profile of the stretched film, from said mapping function and said mass-per-unit area cross-sectional profiles;
    - said computing unit (CALC) computes (S50f, S60B; S150f, S150B) a characteristic cross-sectional profile of the film from said stretching profile and a mass concentration cross-sectional profile of the cavitating agent in the stretched film, which makes it possible to take into account the distribution of the cavities in the film, and
    - said adjustment actuators are controlled (FBK1, FBK2, FBK3, FBK4) according to said characteristic cross-sectional profile.

2. Method for manufacturing a film according to claim 1, **characterized in that** said cavitating agent mass concentration cross-sectional profile is derived (S50c) from said mass-per-unit area cross-sectional profile of the stretched film and a cavitating agent mass-per-unit area profile measured by a cavitating agent mass-per-unit area sensor (Cap$_{s.ag}$; Cap$_{s.oil}$).

3. Method for manufacturing a film according to claim 1, **characterized in that:**

- a cavitating agent mass-per-unit area profile of the unstretched film is measured by a cavitating agent mass-per-unit area sensor ($Cap_{s.ag}$; $Cap_{s.oil}$);
- a mass concentration cross-sectional profile of the cavitating agent of the unstretched film is derived from said cavitating agent mass-per-unit area profile and said mass-per-unit area cross-sectional profile of the unstretched film; and
- said mass concentration cross-sectional profile of the cavitating agent in the stretched film is replaced by applying the mapping function to said mass concentration cross-sectional profile of the cavitating agent of the unstretched film.

4. Method for manufacturing a film according to claim 1, **characterized in that** said mass concentration cross-sectional profile of the cavitating agent is assimilated to the average concentration of the cavitating agent in the film.

5. Method for manufacturing a film according to any one of claims 1, 3 and 4, **characterized in that:**

    - the film undergoes a loss of cavitating agent between the two mass-per-unit area cross-sectional profile measurements;
    - a first cavitating agent mass-per-unit area sensor ($Cap_{s.oil}$) measures (S120) a mass-per-unit area cross-sectional profile for the cavitating agent of the unstretched film;
    - a second cavitating agent mass-per-unit area sensor ($Cap_{s.oil}$) measures (S140) a cavitating agent mass-per-unit area cross-sectional profile of the stretched film;
    - said computing unit (CALC) computes (S145) mass-per-unit area cross-sectional profiles of the film for the polymer alone by subtracting the cavitating agent mass-per-unit area cross-sectional profiles from the mass-per-unit area cross-sectional profiles of the film; and
    - said computing unit (CALC) computes said mapping function (S150a) from the mass-per-unit area cross-sectional profiles of the film for the polymer alone.

6. Method for manufacturing a film according to claim 5, **characterized in that** said step (S130) of stretching (Str1) the film takes place in a first zone (Z1) and is followed by a step (S135) of extracting (Extr) cavitating agent from the film in a second zone (Z2) downstream of the first zone (Z1), the second mass-per-unit area sensor ($Cap_{s.oil}$) measuring said cavitating agent mass-per-unit area cross-sectional profile of the stretched film downstream of the first zone (Z1) and upstream of the second zone (Z2).

7. Method for manufacturing a film according to any of claims 1 to 6, **characterized in that** said characteristic cross-sectional profile of the film is a density cross-sectional profile of the film.

8. Method for manufacturing a film according to claim 7, **characterized in that** said computing unit (CALC) computes (S60A, S160A) a cross-sectional profile of the thickness of the film (F1; F2) from said density profile of the film and said mass-per-unit area cross-sectional profile of the stretched film.

9. Method for manufacturing a film according to claim 8, **characterized in** said adjustment actuators are controlled (FBK1, FBK3) in response to a deviation of said computed thickness profile relative to an expected thickness profile.

10. Method for manufacturing a film according to any of claims 1 to 6, **characterized in that** said characteristic cross-sectional profile of the film is a porosity cross-sectional profile of the film.

11. Method for manufacturing a film according to claim 10, **characterized in that** said adjustment actuators are controlled (FBK2, FBK4) in response to a deviation of the porosity profile computed relative to an expected porosity profile.

12. Method for manufacturing a film according to any of claims 1 to 11, **characterized in that** the edges (E1, E2) of the film (F2) are cut away and removed during formation, said computing unit determining (S200) said mapping function of the film (F2) from the cross-sectional positions ($X'_{min.cut}$, $X'_{max.cut}$) of the edges of the cut film.

Fig. 1A

Fig. 1B

Fig. 1C

Fig. 2A

Fig. 2B

$W'_v(x')$

Fig. 3A

$P(x')$

Fig. 3B

Fig. 4

Fig. 5

100

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060121259 A
- WO 2010059448 A
- US 7813829 B
- US 7813829 B2
- US 5928580 A
- WO 2008016174 A
- US 8841032 B